# EUROPÄISCHE PATENTSCHRIFT

(11) **EP 1 291 266 B1**
(45) Veröffentlichungstag und Bekanntmachung des Hinweises auf die Patenterteilung: **16.04.2008**
(21) Anmeldenummer: 02017168.2
(22) Anmeldetag: 31.07.2002
(51) Int. Cl.: B62D 25/14, B62D 29/00

(54) **Hybridträger für ein Kraftfahrzeug**
Hybrid beam for a motor vehicle
Poutre hybride pour véhicule automobile

(30) Priorität: 11.09.2001 DE 10144714
(43) Veröffentlichungstag der Anmeldung: 12.03.2003
(73) Patentinhaber: Behr GmbH & Co. KG, 70469 Stuttgart (DE)
(72) Erfinder: Feith, Thomas, Dipl.-Ing., 70825 Korntal-Münchingen (DE); Neuss, Sabine, Dipl.-Ing. (FH), 85088 Vohburg (DE); Wolf, Walter, Dipl.-Ing., 71570 Oppenweiler-Zell (DE)
(74) Vertreter: Grauel, Andreas

(56) Entgegenhaltungen:
- EP-A- 1 055 587
- EP-A- 1 090 733
- DE-A- 10 058 318
- DE-A- 19 626 441

## Beschreibung

Die Erfindung betrifft einen Hybridträger für ein Kraftfahrzeug gemäß dem Oberbegriff des Anspruches 1, sowie zwei Verfahren zur Herstellung eines entsprechenden Hybridträgers.

Es ist ein Ziel der Kraftfahrzeughersteller, das Gewicht der Kraftfahrzeuge zu verringern. Aus diesem Grund wird in der DE 100 46 120 A1 ein Bauteil in Hybridbauweise für ein Kraftfahrzeug, insbesondere ein Querträger für den Cockpitbereich beschrieben, das als Leichtbauteil ausgebildet ist mit einem schalenförmigen Grundkörper und mit aus angespritztem Kunststoff bestehenden Verstärkungsrippen. Dabei wird zusammen mit den Verstärkungsrippen wenigstens ein Kanal ganz oder teilweise im Innenraum des Grundkörpers eingespritzt. Der Kanal dient beispielsweise zur Führung von Luft einer Klimaanlage. Ein derartiges Bauteil lässt jedoch noch Wünsche offen.

Aus der EP 335 208 B1 ist, gemäß dem Oberbegriff des Anspruchs 1, ein selbsttragendes Kunststoffbauelement zur Anbringung an einem Träger bekannt, bei weichem ein länglicher Bauelement-Körper an eine Armierungsleiste angespritzt ist.

Ausgehend von diesem Stand der Technik ist es Aufgabe der Erfindung, einen verbesserten Hybridträger bereitzustellen.

Diese Aufgabe wird gelöst durch einen Hybridträger für ein Kraftfahrzeug mit den Merkmalen des Anspruches 1 und zweier Verfahren mit den Merkmalen der Ansprüche 7 und 8. Vorteilhafte Ausgestaltungen sind Gegenstand der Unteransprüche.

Erfindungsgemäß wird ein Hybridträger für ein Kraftfahrzeug, als Querträger für den Cockpitbereich, zur Verfügung gestellt, bei dem neben einem - insbesondere aus einem Blechbiegeteil gebildeten Grundkörper - zwei verschiedene Teile aus unterschiedlichem Kunststoff vorgesehen sind, die vorzugsweise am Grundkörper angespritzt sind. Durch die Verwendung unterschiedlicher Kunststoffe können Kunststoffe eingesetzt werden, die optimal mit der Funktion der entsprechenden Bereiche abgestimmt sind. Bei entsprechender Ausgestaltung kann die Montage vereinfacht, Gewicht eingespart und eine größere Gestaltungsfreiheit gewonnen werden, so dass komplexere räumliche Strukturen möglich sind.

Der um den Grundkörper gespritzte erste Kunststoff weist angeformte und/oder hinterspritzte Anbindungen auf.

Durch den zweiten Kunststoff ist mindestens ein Kanal ausgebildet, insbesondere ein Luftkanal, der Teil einer Klimaanlage ist, oder ein Kanal für das Wischwasser der Scheinwerfer oder der Windschutzscheibe, Kühlwasser, Öl, Druckluft oder dergleichen, ggf. auch zur geschützten Verlegung von Kabeln, Benzinleitungen, Ölleitungen, Druckluftleitungen oder dergleichen.

Vorzugsweise weist der Grundkörper einen sich über dessen Länge veränderlichen Querschnitt auf, wodurch eine optimale Ausnutzung des Bauraums möglich ist. Als Querschnittsveränderung sind auch eine bereichsweise Teilung des Profils in mehrere Stränge, Abkröpfung usw. anzusehen. Gemäß einer Variante ist der Grundkörper mehrteilig ausgebildet. Dabei können die einzelnen Teile des Grundkörpers durch Einspritzen oder aber im Spritzgusswerkzeug und/oder durch ein Fügeverfahren miteinander verbunden sein.

Der Grundkörper weist vorzugsweise Anbindungen zur Anbringung weiterer Bauteile oder zur Befestigung des fertigen Grundkörpers im Fahrzeug auf. Ggf. sind auch die Anbindungen mit angespritzten Versteifungen (bspw. Rippen) versehen.

Dabei ist vorzugsweise der Kanal außenseitig angeordnet, bezogen auf das im wesentlichen U-förmige Profil des Grundkörpers gesehen. Vorzugsweise ist der Kanal zweiteilig ausgebildet, wobei ein Teil durch den fest mit dem Grundkörper verbundenen Teil aus dem zweiten Kunststoff und ein Teil durch einen hieran befestigbaren zweiten Teil gebildet wird.

Im folgenden wird die Erfindung anhand dreier Ausführungsbeispiele unter Bezugnahme auf die Zeichnung im einzelnen erläutert. In der Zeichnung zeigen:
- Fig. 1: einen Grundträger gemäß dem Ausführungsbeispiel,
- Fig. 2: einen Hybridträger gemäß dem ersten Ausführungsbeispiel,
- Fig. 3: den Hybridträger gemäß Fig. 2 aus einer anderen Perspektive ohne Rippen in den Anbindungen,
- Fig. 4: einen Hybridträger gemäß dem zweiten Ausführungsbeispiel, und
- Fig. 5: einen schematisch dargestellten Querschnitt durch ein drittes Ausführungsbeispiel.

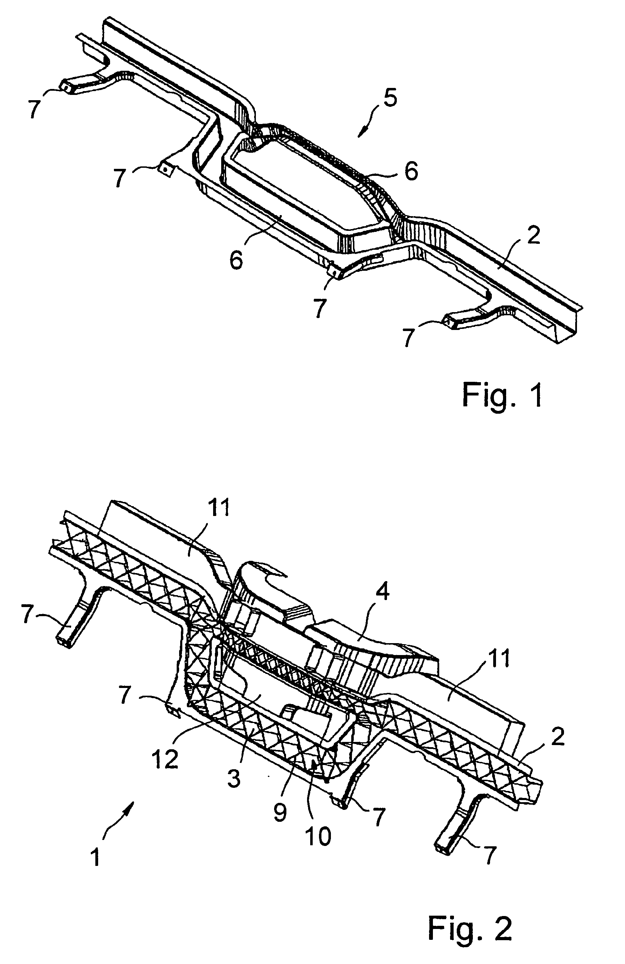

Die Figuren 1 bis 3 zeigen einen Hybridträger 1 gemäß dem ersten Ausführungsbeispiel, der als Querträger in einem Kraftfahrzeug ausgebildet ist. Der Hybridträger 1 weist einen Grundkörper 2, der aus einem Blechbiegeteil besteht, wie es in Fig. 1 dargestellt ist, und einen an diesen Grundkörper 2 angespritzten ersten Teil 3 aus einem ersten Kunststoff, sowie einen angespritzten zweiten Teil 4 aus einem zweiten Kunststoff auf. Dabei wurden der erste Teil 3 und der zweite Teil 4 an den Grundkörper 2 in einem Arbeitsgang angespritzt.

Der einteilige Grundkörper 2 weist ein im wesentlichen U-förmiges, leicht geöffnetes Profil auf, wobei die beiden Enden nach außen gebogen sind. Der Grundkörper 2 ist etwa im mittleren Bereich 5, d.h. im in ein Kraftfahrzeug eingebauten Zustand im Bereich der Mittelkonsole, in zwei Stränge 6 geteilt, wobei jeder Strang 6 ebenfalls ein entsprechendes, im wesentlichen U-förmiges, leicht geöffnetes Profil aufweist. Ferner sind am Grundkörper 2 vier erste Anbindungen 7 vorgesehen. Diese Anbindungen 7 dienen der Anbringung eines Knieaufprallschutzes im Kraftfahrzeug und/oder zur Befestigung der Instrumententafel. Des weiteren sind am Grundkörper 2 zwei zweite Anbindungen 8 zur Befestigung des Hybridträgers 1 an den A-Säulen des Kraftfahrzeugs angebracht. Die zweiten Anbindungen 8 bestehen jeweils im wesentlichen aus einem weiteren Blechbiegeteil, das formschlüssig auf den Grundkörper 2 geschoben ist und mittels einer Schweißverbindung fest verbunden ist. Die Verbindung kann jedoch auch durch ein anderes Fügeverfahren erfolgen.

Zur Erhöhung der Stabilität des Grundkörpers 2 ist, im wesentlichen im Inneren der U-förmigen Profile, der erste Teil 3 aus dem ersten Kunststoff vorgesehen, welcher eine aus Rippen 9 gebildete Wabenstruktur 10 aufweist. Die Wabenstruktur 10 ist hierbei derart ausgebildet, dass die Rippen 9 jeweils im Winkel von ca. 45° zu den Seitenwänden des U-förmigen Profils des Grundkörpers 1 angeordnet sind und sich zwei Rippen 9 im Randbereich treffen. Der erste Kunststoff ist mit Glasfasern versetzt, um die Stabilität zu erhöhen. Die Rippen 9 sind auch im Inneren des U-förmigen Profils der ersten Anbindungen 7 vorgesehen, wodurch die Steifigkeit der ersten Anbindungen 7 erhöht wird. Weitere Anbindungen sind zur Vereinfachung der Darstellung weggelassen. Zusätzlich können die Anbindungen 8 vom ersten Teil 3 zumindest teilweise umschlossen sein, so dass ggf. auch auf eine Schweißverbindung verzichtet werden kann.

Als zweites Teil 4, bestehend aus dem zweiten Kunststoff, sind am Grundkörper 2 zum einen Luftkanäle 11, die zu einer nicht dargestellten Klimaanlage gehören, und zum anderen ein Teil eines Gehäuses 12 angespritzt. Aufgrund der deutlich geringeren Belastung des zweiten Teils 4, d.h. der Luftkanäle 11 und des Teiles des Gehäuses 12, kann sich der zweite Kunststoff deutlich vom ersten Kunststoff unterscheiden. Insbesondere kann beim zweiten Kunststoff Gewicht eingespart werden, da er nicht oder nur in relativ geringem Maße belastet wird.

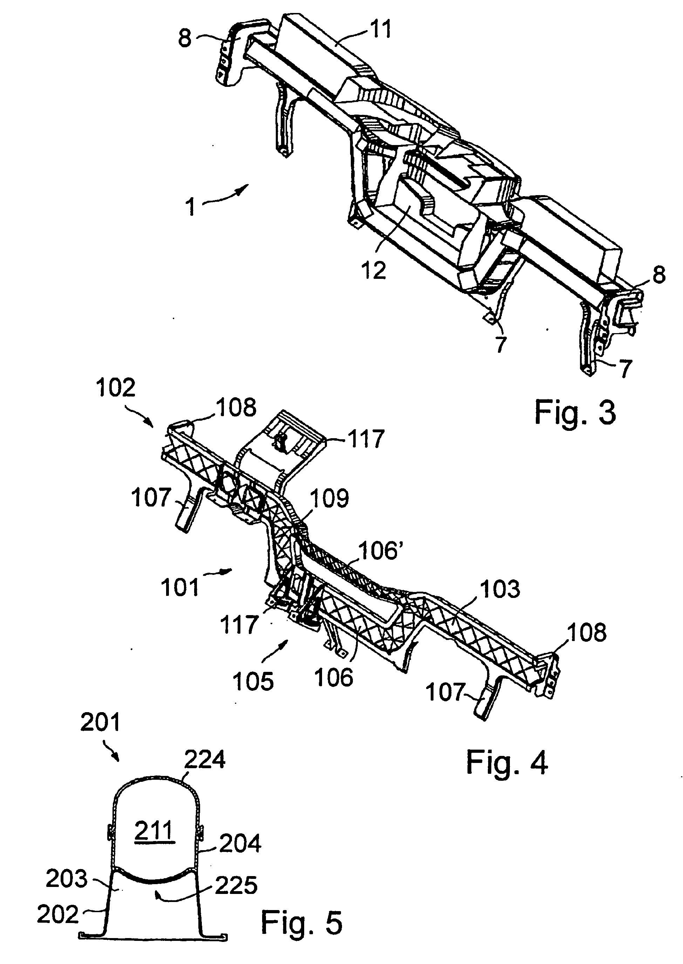

Im folgenden wird unter Bezugnahme auf Fig. 4 ein zweites Ausführungsbeispiel kurz beschrieben, bei dem gleiche oder gleichwirkende Teile um 100 höhere Bezugzeichen als beim ersten Ausführungsbeispiel tragen. Gemäß diesem Ausführungsbeispiel ist ein Hybridträger 101 dargestellt, der ebenfalls als Querträger in einem Kraftfahrzeug ausgebildet ist, dessen Grundkörper 102 im mittleren Bereich 105 zweiteilig ausgebildet ist. Hierbei ist ein kleinerer Strang 106' getrennt vom größeren Strang 106 ausgebildet. Der Grundkörper 102 ist in einem ersten Arbeitsgang mit einem ersten Teil 103 aus Kunststoff versehen worden, wobei die beiden Teile des Grundkörpers 102, d.h. die Stränge 106 und 106', fest miteinander verbunden und jeweils durch Rippen 109 versteift wurden. In einem zweiten Arbeitsgang werden der Grundkörper 102 und das erste Teil 103 mit einem (nicht dargestellten) zweiten Teil versehen.

Am Grundkörper 102 sind erste Anbindungen 107 und zweite Anbindungen 108 vorgesehen, welche denen des ersten Ausführungsbeispiels entsprechen. Ferner sind weitere Anbindungen 117, bspw. zur Anbindung der Lenksäule, der Instrumententafel oder von Zitterstreben, vorgesehen. Die Anbindungen 117 bestehen aus Blechbiegeteilen, welche mit dem Grundkörper 102 verbunden sind, in diesem Fall mittels Nietverbindungen, jedoch sind auch beliebige andere Verbindungen möglich. Bei nicht so stark belasteten Anbindungen 117 oder einer entsprechenden Ausgestaltung der Verbindungsbereiche kann der erste Teil 103 als Verbindung zwischen dem Grundkörper 102 und den weiteren Anbindungen 117 dienen.

Bei dem in Fig. 5 lediglich im Schnitt vereinfacht dargestellten dritten Ausführungsbeispiel sind gleiche oder gleichwirkende Teile mit um 200 höheren Bezugszeichen gegenüber beim ersten Ausführungsbeispiel versehen. Der Hybridträger 201 besteht aus einem Grundkörper 202, einem ersten Teil 203 und einem zweiten Teil 204, sowie einem dritten, nachträglich angebrachten Teil 224. Hierbei handelt es sich wiederum um einen Querträger für ein Kraftfahrzeug.

Der Grundkörper 202 weist einen im wesentlichen U-förmigen, leicht geöffneten Querschnitt auf, dessen Enden nach außen gebogen sind. Der mittlere Bereich 225 ist etwas nach innen gebogen, wobei das Teil 204 an diesem Bereich 225 anliegt. Das Teil 204 bildet einen Kanal, insbesondere einen Luftkanal 211, der durch den als Abdeckung dienenden dritten Teil 224 verschlossen ist. Der Luftkanal 211 ist Teil der Luftzufuhr einer Klimaanlage zum Innenraum des Kraftfahrzeugs. Der Luftkanal 211 ist, wie in den vorangehenden Ausführungsbeispielen, auf der Außenseite, bezogen auf den Grundkörper 202 gesehen, angeordnet. Alternativ oder zusätzlich kann ein oder auch mehr Kanäle an den Flanken des Grundkörpers angebracht sein.

### Bezugszeichenliste

- 1, 101, 201: Hybridträger
- 2, 102, 202: Grundkörper
- 3, 103, 203: erstes Teil
- 4, 204: zweites Teil
- 5, 105: mittlerer Bereich
- 6, 106, 106': Strang
- 7, 107: erste Anbindung
- 8, 108: zweite Anbindung
- 9, 109: Rippen
- 10: Wabenstruktur
- 11, 211: Luftkanal
- 12: Gehäuse
- 117: weitere Anbindung
- 224: drittes Teil
- 225: mittlerer Bereich

## Patentansprüche

1. Querträger für den Cockpitbereich eines Kraftfahrzeugs, wobei der Querträger (1; 101; 201) aus einem schalenförmigen Grundkörper (2; 102; 202) aus einem Blechteil, einer aus einem ersten angespritzten Kunststoff bestehenden Verstärkung (3; 103; 203) und einem aus einem zweiten Kunststoff bestehenden Teil gebildet ist, **dadurch gekennzeichnet, dass** der um den Grundkörper (2; 102; 202) gespritzte erste Kunststoff angeformte und/oder hinterspritzte Anbindungen aufweist und der aus einem zweiten Kunststoff bestehende Teil mindestens einen Kanal (11; 211), insbesondere einen Luftkanal bildet.

2. Querträger nach Anspruch 1, **dadurch gekennzeichnet, dass** der Grundkörper (1; 101) einen sich über dessen Länge veränderlichen Querschnitt aufweist.

3. Querträger gemäß einem der vorhergehenden Ansprüche, **dadurch gekennzeichnet, dass** der Grundkörper (102) mehrteilig ausgebildet ist.

4. Querträger nach einem der vorstehenden Ansprüche, **dadurch gekennzeichnet, dass** der Grundkörper (2; 102) Anbindungen (7, 8; 107, 108, 117) aufweist.

5. Querträger nach einem der vorstehenden Ansprüche, **dadurch gekennzeichnet, dass** der Kanal (11; 211) außenseitig angeordnet ist.

6. Querträger nach einem der vorstehenden Ansprüche, **dadurch gekennzeichnet, dass** der Kanal (211) zweiteilig mit einem fest mit dem Grundkörper verbundenen Teil (204) und einem hieran befestigbaren zweiten Teil (224) ausgebildet ist.

7. Verfahren zur Herstellung eines Hybridträgers gemäß einem der Ansprüche 1 bis 6, **gekennzeichnet durch** die Verfahrensschritte Herstellen des oder der Grundkörper (102; 202) aus einem Blechteil, Spritzen eines ersten Teils (103; 203) an bzw um den oder die Grundkörper (102; 202) und
Spritzen eines zweiten Teils (104; 204) an bzw. um den oder die Grundkörper (102; 202) und/oder das erste Teil (103; 203).

8. Verfahren zur Herstellung eines Querträgers nach Anspruch 7,
**dadurch gekennzeichnet dass**
das das erste Teil (3; 203) und das zweite Teil (104; 204) gleichzeitig gespritzt werden.

## Claims

1. Transverse beam for the cockpit area of a motor vehicle, such that the transverse beam (1; 101; 201) is formed of a basic body shell (2; 102; 202) made from a sheet section, a reinforcement (3; 103; 203) consisting of a first injection-moulded plastic, and a component consisting of a second plastic, **characterised in that** the first plastic injection-moulded around the basic body shell (2; 102; 202) has connection links formed and/or injection-moulded on it and the component consisting of a second plastic forms at least one duct (11; 211), in particular an air duct.

2. Transverse beam according to Claim 1, **characterised in that** the basic body shell (1; 101) has a cross-section that varies along its length.

3. Transverse beam according to Claims 1 or 2, **characterised in that** the basic body shell (102) is formed of more than one part.

4. Transverse beam according to any of the preceding claims, **characterised in that** the basic body shell (2; 102) has connection elements (7,8; 107, 108, 117).

5. Transverse beam according to any of the preceding claims, **characterised in that** the duct (11; 211) is positioned on the outside.

6. Transverse beam according to any of the preceding claims, **characterised in that** the duct (211) is formed in two parts, one part (204) being connected fixed to the basic body shell and the second part (224) being attachable to it.

7. Method for producing a hybrid beam according to any of Claims 1 to 6, **characterised by** the process steps of making the basic body shell of shells (102; 202) from a section of sheet, injection-moulding a first component (1,03; 203) onto or around the said basic body shell(s) (102; 202), and injection-moulding a second component (104; 204) onto or around the basic body shell(s) (102; 202) and/or the first component (103; 203).

8. Method for producing a transverse beam according to Claim 7, **characterised in that** the first component (3; 103) and the second component (104; 204) are injection-moulded at the same time.

## Revendications

1. Traverse pour la zone du poste de conduite d'un véhicule automobile, où la traverse (1 ; 101 ; 201) est formée par un corps de base (2 ; 102 ; 202), en forme de cuvette, réalisé dans une pièce en tôle, par un renfort (3 ; 103 ; 203) se composant d'une première matière plastique moulée par injection, et par une pièce se composant d'une deuxième matière plastique,
**caractérisée en ce que** la première matière plastique moulée par injection autour du corps de base (2 ; 102 ; 202) présente des éléments de fixation moulés et / ou contre-moulés par injection, et la pièce se composant d'une deuxième matière plastique forme au moins un conduit (11 ; 211), en particulier un conduit d'air.

2. Traverse selon la revendication 1, **caractérisée en ce que** le corps de base (1 ; 101) présente une section variable sur sa longueur.

3. Traverse selon l'une ou l'autre des revendications précédentes, **caractérisée en ce que** le corps de base (102) est configuré en plusieurs parties.

4. Traverse selon l'une quelconque des revendications précédentes, **caractérisée en ce que** le corps de base (2 ; 102) présente des éléments de fixation (7, 8 ; 107, 108, 117).

5. Traverse selon l'une quelconque des revendications précédentes, **caractérisée en ce que** le conduit (11 ; 211) est disposé extérieurement.

6. Traverse selon l'une quelconque des revendications précédentes, **caractérisée en ce que** le conduit (211) est configuré en deux parties, en comportant une pièce (204) reliée fixement au corps de base, et une deuxième pièce (224) pouvant être fixée sur celle-ci.

7. Procédé de fabrication d'une poutre hybride conformément à l'une quelconque des revendications 1 à 6, **caractérisé par** les étapes du procédé consistant :
- à fabriquer le ou les corps de base (102 ; 202) dans une pièce en tôle,
- à mouler par injection une première pièce (103 ; 203) sur ou autour du ou des corps de base (102 ; 202), et
- à mouler par injection une deuxième pièce (104 ; 204) sur ou autour du ou des corps de base (102 , 202) et / ou sur ou autour de la première pièce (103 ; 203).

8. Procédé de fabrication d'une traverse selon la revendication 7, **caractérisé en ce que** la première pièce (3 ; 203) et la deuxième pièce (104 ; 204) sont moulées par injection en même temps.
